# EUROPÄISCHE PATENTSCHRIFT

(11) **EP 2 819 900 B1**
(45) Veröffentlichungstag und Bekanntmachung des Hinweises auf die Patenterteilung: **20.10.2021**
(21) Anmeldenummer: 13709803.4
(22) Anmeldetag: 28.02.2013
(51) Int. Cl.: B60T 8/36

(54) **ELEKTROHYDRAULISCHE DRUCKREGELVORRICHTUNG FÜR FAHRZEUGBREMSSYSTEME**
ELECTROHYDRAULIC PRESSURE CONTROL DEVICE FOR VEHICLE BRAKE SYSTEMS
DISPOSITIF DE RÉGULATION DE PRESSION ÉLECTRO-HYDRAULIQUE POUR SYSTÈMES DE FREINAGE DE VÉHICULES

(30) Priorität: 29.02.2012 DE 102012203159
(43) Veröffentlichungstag der Anmeldung: 07.01.2015
(73) Patentinhaber: Continental Teves AG & Co. OHG, 60488 Frankfurt am Main (DE)
(72) Erfinder: HEISE, Andreas, 64390 Erzhausen (DE)
(74) Vertreter: Continental Corporation
(86) Internationale Anmeldenummer: PCT/EP2013/054111
(87) Internationale Veröffentlichungsnummer: WO 2013/127969

(56) Entgegenhaltungen:
- DE-A1- 19 519 888
- DE-A1- 19 639 198
- DE-A1-102005 059 941
- DE-A1-102006 037 695
- US-A1- 2005 057 093

## Beschreibung

Die vorliegende Erfindung betrifft eine elektrohydraulische Druckregelvorrichtung für Fahrzeugbremssysteme gemäß Oberbegriff von Anspruch 1.

Die DE 10 2005 059 941 A1 beschreibt eine elektrohydraulische Druckregelvorrichtung für Kraftfahrzeugbremssysteme umfassend eine elektronische Kontrolleinheit, ein Hydraulikaggregat sowie einen Elektromotor, welcher mittels eines durch das Hydraulikaggregat geführten Adapters angesteuert wird. Die elektronische Kontrolleinheit ist mit dem Hydraulikaggregat abdichtend verbunden, wobei das Hydraulikaggregat auf einer Umfangsfläche einer der elektronischen Kontrolleinheit zugewandten Seite eine Nut aufweist, in der eine Dichtung geführt ist, wobei eine in das Innere des aus Metall bestehenden Gehäuses der elektronischen Kontrolleinheit gerichtete ringförmige Umformung im Dichtungsbereich in Kombination mit der Nut eine dichtende Klemmung realisiert. Aufgrund der Steifigkeit des Werkstoffs eines metallischen Gehäusedeckels, welcher auf einem Gehäuserahmen befestigt wird, kann der Deckel ohne die bei Kunststoff sonst übliche Verwendung von Metallhülsen im Gehäuserahmen mittels Schrauben an der Hydraulikeinheit montiert werden. Weiterhin wird eine Umformung des Metalldeckels und in Folge dessen eine Klemmung mit einer Gehäusewand des Gehäuserahmens auf Seiten eines Steckers beschrieben, wobei auf der gegenüberliegenden Deckelseite Schrauben zum Anziehen an den Gehäuserahmen verwendet werden.

Um Gewicht und Platzbedarf zu begrenzen, werden die Gehäuse der elektronischen Kontrolleinheiten unter möglichst geringstem Materialeinsatz gefertigt. Insbesondere beim Auftreten von Scherbelastungen kommt es jedoch aufgrund schmaler Gehäusewände und geringer Versteifung möglicherweise zu Undichtigkeiten der Dichtungen. Das Eintreten von Flüssigkeit in das Gehäuse kann zum Defekt von Baugruppen innerhalb der gesamten Druckregelvorrichtung führen und einen Ausfall der entsprechenden Fahrzeugbremsanlage verursachen.

Es ist daher Aufgabe der vorliegenden Erfindung, eine elektrohydraulische Druckregelvorrichtung bereitzustellen, welche eine erhöhte Toleranz gegenüber Scherbelastungen aufweist und dabei kostengünstig herstellbar ist.

Diese Aufgabe wird durch eine elektrohydraulische Druckregelvorrichtung gemäß Anspruch 1 gelöst.

Die Erfindung beschreibt eine elektrohydraulische Druckregelvorrichtung für Fahrzeugbremssysteme umfassend zumindest eine elektronische Kontrolleinheit, wenigstens eine Hydraulikeinheit sowie mindestens einen Elektromotor zum Antreiben einer hydraulischen Pumpe, wobei die elektronische Kontrolleinheit mit der Hydraulikeinheit mechanisch verbunden und in wenigstens einem Verbindungsbereich zur Hydraulikeinheit mittels eines umlaufenden, insbesondere elastischen, Dichtmaterials gegenüber einer äußeren Umgebung abgedichtet ist und die elektronische Kontrolleinheit ein Gehäuse und mindestens einen mehrere Kontaktstifte aufweisenden Stecker und/oder Anschlussleitung zur elektrischen Kontaktierung mittels zumindest eines Anschlusssteckers umfasst, wobei der Stecker auf einer der Hydraulikeinheit abgewandten Seite des Gehäuses der elektronischen Kontrolleinheit angeordnet ist und das Gehäuse der elektronischen Kontrolleinheit wenigstens eine Ventilspule zum Ansteuern hydraulischer Ventile und mindestens eine Leiterplatte zur Aufnahme von elektrischen und/oder elektronischen Bauelementen umschließt, wobei die Kontaktstifte und die Ventilspule und mindestens ein Anschluss des Elektromotors jeweils elektrisch leitfähig mit der Leiterplatte verbunden sind, wobei sich die Druckregelvorrichtung weiterhin dadurch auszeichnet, dass das Dichtmaterial entlang einer Kante der im Wesentlichen quaderförmigen Hydraulikeinheit verläuft, wobei die Kante durch eine der elektronischen Kontrolleinheit zugewandten Quaderfläche der Hydraulikeinheit und wenigstens einer der elektronischen Kontrolleinheit nicht zugewandten Quaderfläche der Hydraulikeinheit gebildet ist und das Dichtmaterial beide Quaderflächen im Verbindungsbereich und/oder Dichtbereich zumindest teilweise bedeckt.

In vorteilhafter Weise werden durch die Erfindung die Scherbelastungen auf die Dichtung der elektronischen Kontrolleinheit verringert und damit ein mögliches Eindringen von Flüssigkeit in die elektronische Kontrolleinheit sowie auftretende Defekte vermieden.

Bevorzugt weist das insbesondere zusätzlich als Klebstoff wirkende Dichtmaterial während eines Montageprozesses eine erhöhte Fluidität auf und unterliegt anschließend einem Aushärtevorgang. Durch diese Maßnahme dichtet das Dichtmaterial in vorteilhafter Weise auch bei auftretenden Kräften, insbesondere Scherkräften, auf die elektronische Kontrolleinheit und/oder auf die Hydraulikeinheit.

Entsprechend einer bevorzugten Ausführungsform umfasst die elektronische Kontrolleinheit wenigstens ein Tragelement, wobei das Tragelement gegen die Hydraulikeinheit und das Gehäuse der elektronischen Kontrolleinheit in der Weise stützt, dass das Tragelement und das Gehäuse der elektronischen Kontrolleinheit, insbesondere im Verbindungsbereich und/oder Dichtbereich zur Hydraulikeinheit, einen Mindestabstand zur Hydraulikeinheit aufweisen. Durch den sichergestellten Mindestabstand wird in vorteilhafter Weise ein definierter Dichtbereich geschaffen, welcher die Entstehung von Undichtigkeiten verhindert, die beispielsweise durch Gegeneinanderdrücken von Hydraulikeinheit und elektronischer Kontrolleinheit bei noch nicht ausgehärtetem Dichtmaterial hervorgerufen werden könnten.

Gemäß einer vorteilhaften Weiterbildung der Erfindung weisen das Tragelement und das Gehäuse der elektronischen Kontrolleinheit und die Leiterplatte zumindest eine gemeinsame und insbesondere lediglich in Kombination wirkende, mechanische Verbindung auf, welche eine relative Fixierung zueinander erlaubt. Erst bei Zusammenführen dieser drei Komponenten erfolgt somit eine Fixierung von Leiterplatte und Tragelement, was in vorteilhafter Weise beispielsweise Vereinfachungen bei Montageprozessen ermöglicht.

Das Gehäuse der elektronischen Kontrolleinheit ist bevorzugt mit dem Stecker stoffschlüssig verbunden und/oder aus einem Kunststoff gefertigt und ist insbesondere im Wesentlichen einteilig ausgelegt. Hierdurch können vorteilhafterweise Dichtstellen eingespart werden, wodurch die Wahrscheinlichkeit von Defekten reduziert wird. Weiterhin können das Gewicht der Druckregelvorrichtung sowie die Herstellungskosten verringert werden.

Die mechanische Verbindung der elektronischen Kontrolleinheit mit der Hydraulikeinheit ist besonders bevorzugt unter Vermeidung einer oder mehrerer Schraubverbindungen ausgebildet. In vorteilhafter Weise wird somit eine schraubenlose Verbindung der elektronischen Kontrolleinheit mit der Hydraulikeinheit realisiert, wodurch Material- sowie Herstellungskosten eingespart werden können. Weiterhin vorteilhaft ist, dass sich aufgrund des Wegfalls von Verschraubungsbereichen kleinere Abmessungen der gesamten Druckregelvorrichtung ergeben.

Besonders bevorzugt weist das Gehäuse der elektronischen Kontrolleinheit Rastmittel auf, welche in Aussparungen und/oder Rastausformungen der Hydraulikeinheit einrasten. Der Vorteil ist, dass die mechanische Stabilität erhöht und insbesondere ein als Klebstoff wirkendes Dichtmaterial, insbesondere auf Zug, mechanisch entlastet werden.

Gemäß einer bevorzugten Ausführungsform ist der Elektromotor durch die elektronische Kontrolleinheit umschlossen. Der Vorteil besteht darin, dass die Ansteuerung des Elektromotors ohne einen durch die Hydraulikeinheit hindurchgeführten Motorkontakt erfolgen kann, was die Defektanfälligkeit verringert sowie den Platzbedarf senkt. Außerdem kann dann eine ansonsten vorzusehende Dichtung zwischen Elektromotor und Hydraulikeinheit entfallen, wodurch eine weitere mögliche Eintrittsstelle für Flüssigkeiten entfällt. Weiterhin kann das Gehäuse des Elektromotors und/oder die Halterungen bzw. Befestigungen des Gehäuses des Elektromotors bevorzugt in einer nicht wasserdichten Ausführung vorgesehen sein, da das Gehäuse der elektronischen Kontrolleinheit über die Dichtung mit der Hydraulikeinheit vor flüssigen Medien der Umgebung der Druckregelvorrichtung abdichtet.

Gemäß einer bevorzugten Ausführungsform der Erfindung liegt das Tragelement mittels wenigstens eines Sockelteils auf der Hydraulikeinheit auf, wobei das Sockelteil insbesondere stoffschlüssig mit dem Tragelement verbunden ist. Das Dichtmaterial füllt im Verbindungsbereich der elektronischen Kontrolleinheit zur Hydraulikeinheit besonders bevorzugt wenigstens ein durch das Sockelteil erzeugtes Volumen zwischen dem Tragelement und der Hydraulikeinheit und/oder wenigstens ein Volumen zwischen der Hydraulikeinheit und dem Gehäuse der elektronischen Kontrolleinheit und/oder wenigstens ein Volumen zwischen dem Tragelement und dem Gehäuse der elektronischen Kontrolleinheit teilweise oder vollständig aus. In vorteilhafter Weise wird dadurch eine im Wesentlichen hinreichend dicke und somit im Wesentlichen sichere und Belastungstolerante, insbesondere im Wesentlichen von Zugspannung entlastete und/oder befreite Dichtung geschafften.

Entsprechend einer besonders bevorzugten Ausführungsform ist zur Bildung der mechanischen Verbindung des Tragelements und des Gehäuses der elektronischen Kontrolleinheit und der Leiterplatte wenigstens ein mit dem Tragelement und/oder dem Gehäuse der elektronischen Kontrolleinheit insbesondere stoffschlüssig verbundener Dübel in eine Durchgangsöffnung der Leiterplatte eingeschoben, wobei wenigstens ein in den Dübel eingeschobenes Spreizmittel den Dübel derart spreizt, dass eine zumindest teilweise mechanisch Fixierung vorliegt. Das Spreizmittel ist mit dem Gehäuse bevorzugt stoffschlüssig verbunden.

Bevorzugt umfasst das Gehäuse der elektronischen Kontrolleinheit Gehäusestifte, welche in Öffnungen des Tragelements eingeführt sind. Hierdurch stützen sich in vorteilhafter Weise das Gehäuse und das Tragelement in Verbindung mit der Hydraulikeinheit gegenseitig ab, wodurch unter anderem Mindestabstände zur Bildung von Volumen für das Dichtmaterial erzeugt werden.

Entsprechend einer bevorzugten Ausführungsform ist wenigstens ein elastisches Element vorgesehen, welches auf der Ventilspule aufliegt und mit dem Tragelement insbesondere stoffschlüssig verbunden ist. Das elastische Element kann vorteilhaft in einem gemeinsamen Fertigungsschritt entsprechend der Herstellung des Tragelements hergestellt werden, beispielsweise in einem gemeinsamen Spritzgussverfahren, wodurch wiederum keine metallischen elastischen Elemente vorgesehen werden müssen.

Die Ventilspule ist bevorzugt, insbesondere zusätzlich, mit einem Klebstoff mit der Hydraulikeinheit verbunden. Bevorzugt wird zur Verbindung der Ventilspule mit der Hydraulikeinheit das Dichtmaterial verwendet, welches für die Dichtung des Gehäuses der elektronischen Kontrolleinheit zur Hydraulikeinheit genutzt wird. Dies unterstützt vorteilhaft das elastische Element bei der toleranzbehafteten, mechanischen Positionierung der Ventilspulen insbesondere für den Fall einer eventuellen Alterung eines für das elastische Element verwendeten Werkstoffs.

Der Kontaktstift ist bevorzugt mittels Einpresskontakten elektrisch leitfähig mit der Leiterplatte verbunden und der Kontaktstift weist zumindest ein Sägezahnprofil auf, wobei das Sägezahnprofil in Ausnehmungen des Gehäuses der elektronischen Kontrolleinheit einkerbt. Mittels des Kontaktstifts ist bevorzugt zumindest eine weitere wenigstens teilweise mechanische Fixierung der Leiterplatte mit dem Gehäuse der elektronischen Kontrolleinheit vorgesehen. In Ergänzung oder alternativ können die Kontaktstifte bevorzugt durch das Gehäuse der elektronischen Kontrolleinheit mechanisch Fixierend, z.B. mittels Spritzgussverfahren realisiert, umgeben sein. Weiterhin weist der Kontaktstift bevorzugt Anschlagschultern auf, welche auf dem Gehäuse der elektronischen Kontrolleinheit aufliegen. Der Vorteil besteht darin, dass die Leiterplatte im Einpressbereich insbesondere durch die Kontaktstifte positioniert wird und im Wesentlichen keine bzw. lediglich geringe Kräfte in Folge des Steckens oder Abziehens eines Anschlusssteckers auf die Leiterplatte übertragen werden, wodurch Defekte an den elektronischen Komponenten vermieden werden können.

Entsprechend einer bevorzugten Ausführungsform ist zumindest ein Federarm vorgesehen, welcher mit dem Tragelement verbunden ist und auf der Hydraulikeinheit aufliegt. Der Federarm drückt die Hydraulikeinheit auf die Rastmittel des Gehäuses, was insbesondere während des Aushärtungsprozesses des Dichtmaterials von Vorteil ist.

Weitere bevorzugte Ausführungsformen ergeben sich aus den Unteransprüchen und der nachfolgenden Beschreibung eines Ausführungsbeispiels an Hand von Figuren.

Es zeigen in schematischer Darstellung:
- Fig. 1: ein Ausführungsbeispiel der erfindungsgemäßen elektrohydraulischen Druckregelvorrichtung für ein Fahrzeugbremssystem,
- Fig. 2: eine Darstellung des Dichtungsbereichs des Gehäuses der elektronischen Kontrolleinheit zur Hydraulikeinheit,
- Fig. 3: eine gegenüber der Fig. 1 um etwa 90° gedrehte Perspektive der elektrohydraulischen Druckregelvorrichtung,
- Fig. 4: die Montage der erfindungsgemäßen elektrohydraulischen Druckregelvorrichtung,
- Fig. 5: eine beispielsgemäße Ausführungsform der Kontaktstifte für Nieder- und Hochstromtragfähigkeit und
- Fig. 6: ein Ausführungsbeispiel der mechanischen Fixierung der Leiterplatte mittels Dübel und Spreizmittel.

Um eine kurze und einfache Beschreibung der Ausführungsbeispiele zu ermöglichen, werden gleiche Elemente mit den gleichen Bezugszeichen versehen und jeweils nur die für die Erfindung wesentlichen Details erläutert.

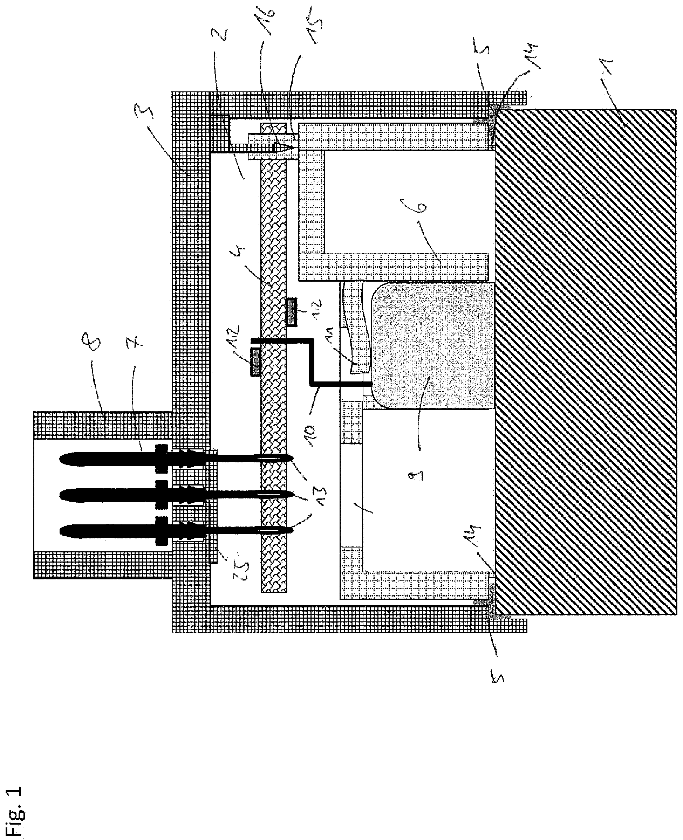

Fig. 1 zeigt ein Ausführungsbeispiel der erfindungsgemäßen elektrohydraulischen Druckregelvorrichtung für ein Fahrzeugbremssystem, z.B. für ein Zweiradfahrzeug oder ein Fahrzeug mit mehr als zwei Rädern, in Schnittdarstellung. Gehäuse 3 der elektronischen Kontrolleinheit 2 ist am Verbindungsbereich zur hydraulischen Kontrolleinheit 1 mittels Dichtmaterial 5 gegenüber der Umgebung im Wesentlichen umlaufend abgedichtet. Dichtmaterial 5 wirkt demgemäß als Dichtund/oder Füllstoff und kann zudem insbesondere als Klebstoff vorgesehen sein, um eine mechanische Fixierung von Gehäuse 3 an Hydraulikeinheit 1 zu realisieren bzw. zu unterstützen.

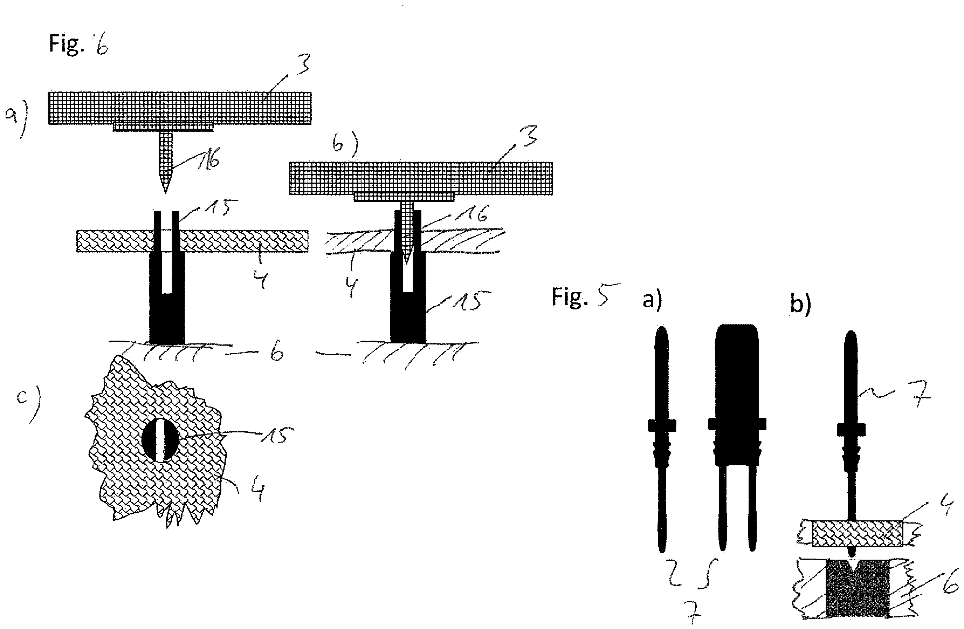

Gehäuse 5 umschließt weiterhin Leiterplatte 4 und Tragelement 6. In an sich bekannter Weise sind zumindest auf einer Oberfläche von Leiterplatte 4 elektronische Bauelemente 12, beispielsweise zur Ansteuerung von Ventilspule 9, angeordnet. Eine mechanische Fixierung bzw. relative Positionierung von Leiterplatte 4 und/oder Tragelement 6 und/oder Gehäuse 3 zueinander ist beispielsgemäß mittels Dübel 15 in Verbindung mit Spreizmittel 16 umgesetzt. Spreizmittel 16 ist dabei mit Gehäuse 3 und Dübel 15 ist mit Tragelement 6 stoffschlüssig verbunden. Durch das Einschieben von Spreizmittel 16 in den in eine Durchgangsöffnung von Leiterplatte 4 eingeführten Dübel 15, ist Dübel 15 derart gespreizt, dass die solchermaßen hervorgerufenen Klemmkräfte auf die Durchgangsöffnung eine weitgehend stabile mechanische Verbindung zu Leiterplatte 4 bewirken, wodurch Leiterplatte 4 mechanisch fixiert wird. Zusätzlich ist diese mechanische Verbindungstechnik ausschnittsweise in Fig. 6 a) bis c) gezeigt, wobei Fig. 6 a) und b) Spreizmittel 16 vor und nach Einführung in Dübel 15 und Fig. 6 c) den in die Durchgangsöffnung von Leiterplatte 4 eingeschobenen Dübel 15 in Draufsicht darstellen.

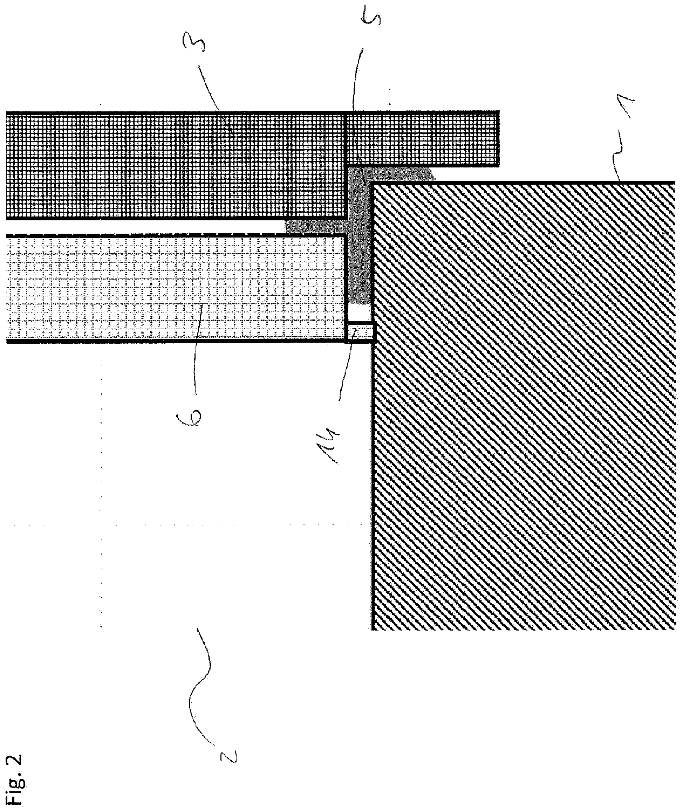

Tragelement 6 umgibt im Wesentlichen die zur hydraulischen Bremsenregelung vorgesehenen Ventilspulen 9 und Elektromotor 18 der Hydraulikpumpe, wobei in Fig. 1 zunächst lediglich eine einzelne Ventilspule 9 dargestellt ist. Um ein weitgehend vollständiges Abdichten mittels Dichtmaterial 5 zu realisieren, ist das mit Tragelement 6 stoffschlüssig verbundene Sockelteil 14 vorgesehen, durch das ein begrenzter Abstand zwischen Hydraulikeinheit 1 und dem, zumindest im Dichtungsbereich relativ zu Sockelteil 14, ausgedehnterem Tragelement 6 geschaffen wird. Hydraulikeinheit 1 dient als Sockelteil 14 und über dieses dem Tragelement 6 als Auflagefläche. Das durch die unterschiedliche Geometrie von Sockelteil 14 und Tragelement 6 im Dichtungsbereich erzeugte Volumen zwischen Hydraulikeinheit 1 und Tragelement 6 ist durch Dichtmaterial 5 teilweise oder vollständig ausgefüllt. Weiterhin füllt Dichtmaterial 5 ein Volumenbereich zwischen Tragelement 6 und Gehäuse 3 sowie zwischen Gehäuse 3 und Hydraulikeinheit 1. Zur besseren Veranschaulichung ist der Dichtungsbereich zwischen Hydraulikeinheit 1 mit der elektronischen Kontrolleinheit 2 in Fig. 2 nochmals vergrößert gezeigt, wobei betont wird, dass die Abbildungen keinen Rückschluss auf reale Proportionen und/oder Maße zulassen. Fertigungstechnisch auftretende Abstandstoleranzen zwischen Gehäuse 3 und Tragelement 6 aber auch z.B. der Hydraulikeinheit 1 können durch Dichtmaterial 5 ausgeglichen werden. Trägerelement 6 und somit auch Gehäuse 3 können bei der Montage leicht zurückfedern, sodass Sockelteil 14 während des Aushärtungsprozesses einen Abstand zur Hydraulikeinheit 1 aufweist, ohne dass bei der Montage der Gehäuseteile Dichtmaterial 5 weggedrückt werden kann. Ein Mindestabstand zwischen Gehäuse 3 und Hydraulikeinheit 1 wird durch den Aufbau der Druckregelvorrichtung realisiert.

Ventilspule 9 ist mittels Anschlusskontaktierung 10 mit Leiterplatte 4 zumindest elektrisch leitfähig verbunden, worüber diese in an sich bekannter Weise zur Betätigung von Hydraulikventilen angesteuert werden. Das insbesondere stoffschlüssig mit Tragelement 6 verbundene elastische Element 11 dient dazu eine flexible bzw. toleranzausgleichende mechanische Positionierung von Ventilspule 9 zu erhalten. Alternativ kann das elastische Element 11 auch mit Ventilspule 9 verbunden und/oder, abweichend zu dem als Federarm dargestellten Beispiel, ein aus einem elastischen Werkstoff, wie beispielsweise Silikon, bestehender Tropfen sein.

Gehäuse 3 der elektronischen Kontrolleinheit 2 umfasst weiterhin Stecker 8 zur elektrischen Kontaktierung der elektrohydraulischen Druckregelvorrichtung beispielsweise an wenigstens ein Fahrzeugbordnetz und/oder Fahrzeugbussystem unter Verwendung zumindest eines nicht dargestellten Anschlusssteckers bzw. einer Kupplung. Zur Bildung von Stecckontakten einer elektrischen Verbindungsanordnung von Stecker 8 mit einem Anschlussstecker sind im Bereich von Stecker 8 elektrisch leitfähige Kontaktstifte 7 durch Gehäuse 3 hindurchgeführt, welche insbesondere aus Stanzblech gefertigt sind. Die Kontaktstifte 7 sind jeweils über Einpresskontakt 13 innerhalb der elektronischen Kontrolleinheit 2 in Leiterplatte 4 eingepresst. Alternative elektrisch leitfähige Verbindungsarten, wie beispielsweise Löt- oder Schweißverbindungen, sind ebenfalls durch die vorliegende Erfindung umfasst. Zur mechanischen Fixierung können, wie im Ausführungsbeispiel gezeigt, die Kontaktstifte 7 z.B. Sägezahnprofile aufweisen, welche in Ausnehmungen von Gehäuse 3 einkerben und dadurch Kräfte insbesondere in Folge eines Abziehens eines Anschlusssteckers aufnehmen können. Zum Entlasten von Leiterplatte 4 bezüglich auftretender Kräfte bei Stecken eines Anschlusssteckers, weisen die Kontaktstifte 7 weiterhin Anschlagschultern auf, die auf Gehäuse 3 aufliegen. Eine weitere Ausführungsform von Kontaktstift 7, besonders für die Übertragung größerer Leistungen, ist in Fig. 5 a) dargestellt, wobei dieser zwei Einpresskontakte 13 umfasst. Entsprechend einer in Fig. 5 b) ausschnittsweise dargestellten Ausführungsform liegt Einpresskontakt 13 bevorzugt auf der dem Stecker 8 abgewandten Seite von Leiterplatte 4 auf Tragelement 6 auf. Zusätzlich zu den Anschlagschultern von Kontaktstift 7 können dadurch Kräfte beim Stecken eines Anschlusssteckers aufgenommen eine Auflagemöglichkeit für Leiterplatte 4 in diesem Bereich der elektronischen Kontrolleinheit 2 realisiert werden.

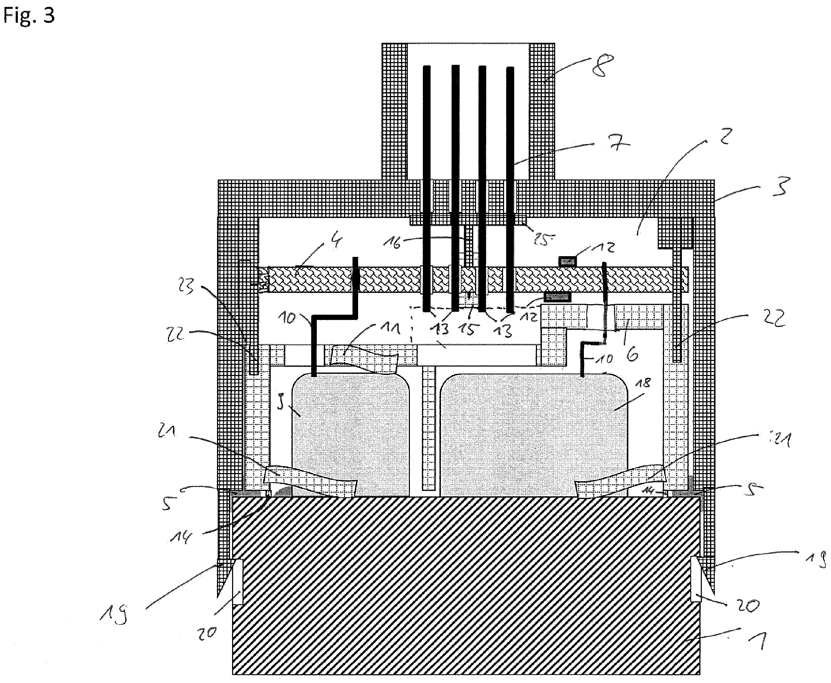

Die Fig. 3 zeigt das Ausführungsbeispiel der erfindungsgemäßen elektrohydraulischen Druckregelvorrichtung gemäß Fig. 1 mit um etwa 90° gedrehter Perspektive, wobei zusätzlich Elektromotor 18 der hydraulischen Pumpe abgebildet ist. Dieser befindet sich im von Gehäuse 3 umfassten abgedichteten Gehäusevolumenbereich der elektronischen Kontrolleinheit 2. Alternativ kann Elektromotor 18 in an sich bekannter Weise auch außerhalb von Gehäuse 3, insbesondere jedoch auf einer, der elektronischen Kontrolleinheit 2 gegenüberliegenden Seite von Hydraulikeinheit 1 vorgesehen sein, wobei die Kontaktierung in an sich bekannter Weise z.B. durch Hydraulikeinheit 1 erfolgt. Der besseren Übersichtlichkeit halber ist der beispielhafte Teil von Tragelement 6, welcher mit Dübel 15 verbunden ist, lediglich als Strichlinie angedeutet.

Um Dichtmaterial 5 gegenüber Zugkräften zwischen Hydraulikeinheit 1 und elektronische Kontrolleinheit 2 zu entlasten, sind an Gehäuse 3 gegenüberliegende Rastmittel 19 vorgesehen, welche in Aussparungen 19 von Hydraulikeinheit 1 einrasten, wodurch die mechanische Verbindung von Hydraulikeinheit 1 und elektronischer Kontrolleinheit 2 realisiert ist. Gemäß einer nicht gezeigten Ausführungsform weist Hydraulikeinheit 1 nach außen weisende Rastausformungen auf, wobei die Rastmittel 19 an diesen entsprechend einrasten. Das als Klebstoff wirkende Dichtmaterial 5 kann dabei zusätzlich als Zug- und Druckentlastung dienen, wobei gemäß einer weiteren bevorzugten, jedoch nicht dargestellten Ausführungsform die Rastmittel 19 entfallen können. Ventilspule 9 kann zusätzlich zum elastischen Element 11 mit Klebstoff, insbesondere dem Dichtmaterial 5, mit Hydraulikeinheit 1 verbunden werden.

Gehäuse 3 umfasst schwertförmige Gehäusestifte 22, welche in Öffnungen von Tragelement 6 eingesteckt sind und beispielsweise in Kombination mit Anschlagschulter 23 einen Endanschlag für Tragelement 6 bilden. Um eine möglichst große, mit elektronischen Bauelementen bestückbare Fläche von Leiterplatte 4 zu erreichen können ein oder mehrere Gehäusestifte 22 durch entsprechende Durchgangsöffnungen in Leiterplatte 4 hindurchgeführt werden und/oder Aussparungen an den Rändern von Leiterplatte 4 vorgehen sein, wie ebenfalls in Fig. 3 dargestellt.

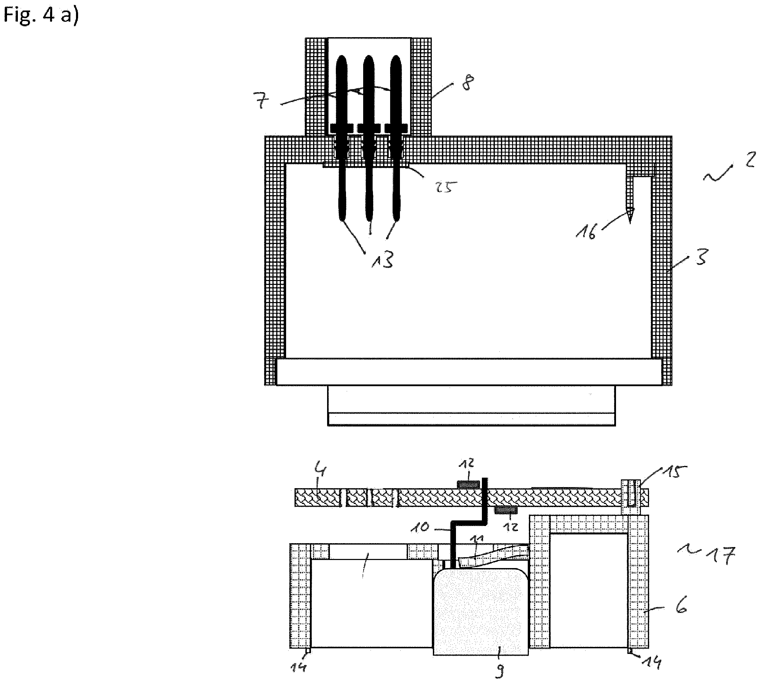

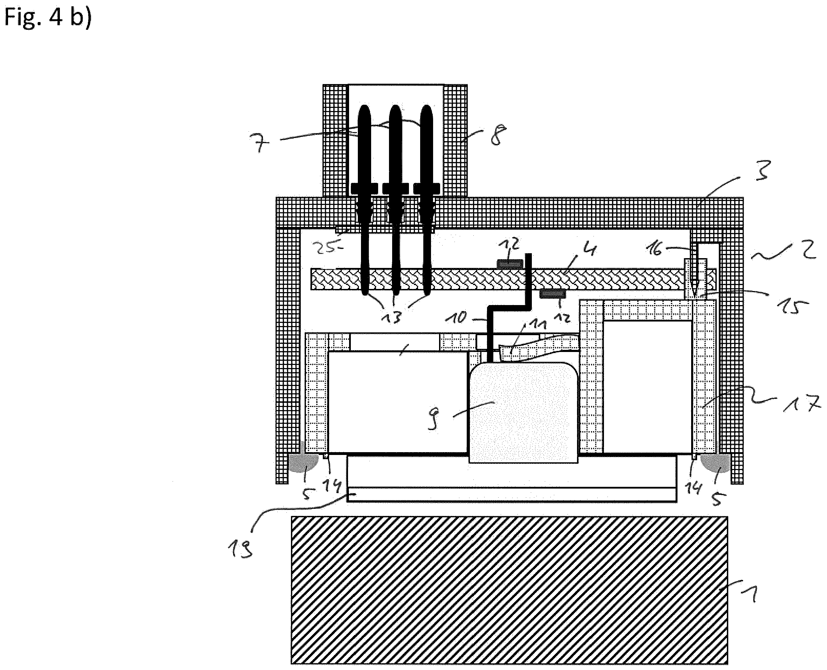

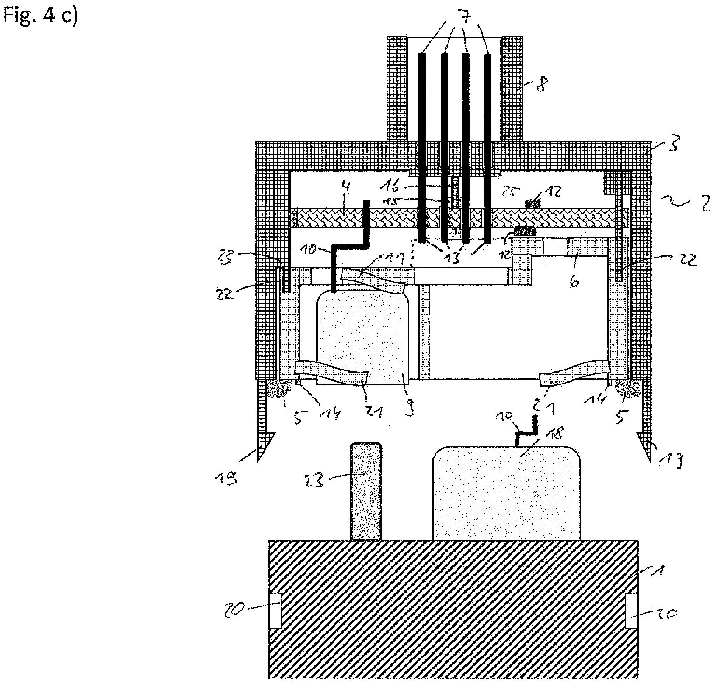

Die Fig. 4 a), b) und c) zeigen eine beispielhafte Vorgehensweise der Montage der erfindungsgemäßen elektrohydraulischen Druckregelvorrichtung entsprechend dem Ausführungsbeispiel. Dabei werden zunächst die Kontaktstifte 7 in die dafür vorgesehenen Ausnehmungen bzw. Durchgangsöffnungen des einteiligen und aus Kunststoff gefertigten Gehäuses 3 der elektronischen Kontrolleinheit 2 eingeschoben. Anschließend wird die vormontierte Baugruppe 17, umfassend zumindest Leiterplatte 4 und Tragelement 6, mit in die dafür vorgesehene Durchgangsöffnung von Leiterplatte 4 eingeführtem Dübel 15, sowie die elektrisch über Spulenanschlusskontaktierung 10 mit Leiterplatte 4 verbundene Ventilspule 9 in Gehäuse 3 eingeschoben bzw. sind im Herstellungsprozess von Gehäuse 3 bereits eingegossen worden. Die relativen Bewegungen von Gehäuse 3 und vormontierter Gruppe sind im Wesentlichen unerheblich. Bei diesem Vorgang weitet Spreizmittel 16 Dübel 15 auf, wobei die weiter oben beschriebene mechanische Verbindung realisiert wird. Die Einpresskontakte 13 werden zeitgleich in dafür vorgesehene Öffnungen eingepresst, wobei auf Leiterplatte 4 eine entgegen der Einpresskraft wirkende Gegenkraft aufgebracht wird, um mechanische Deformationen von Leiterplatte 4 zu vermeiden. Für diesen Vorgang wird insbesondere ein Werkzeug vorgesehen, welches durch eine in diesem Bereich angeordnete Durchgangsöffnung in Tragelement 6 hindurch die entsprechende Gegenkraft aufbringen kann. In weiteren Prozessschritten erfolgt zunächst das Aufbringen von Dichtmaterial 5 und im Nachhinein die Montage von Hydraulikeinheit 1, wobei die Rastmittel 19 in Aussparung 20 einrasten und die vormontierte Baugruppe 17 gegenüber der äußeren Umgebung der elektrohydraulischen Kontrolleinheit abgedichtet wird.

Die Fig. 4 c) zeigt beispielhaft den Zusammenbau von Hydraulikeinheit 1 und elektronischer Kontrolleinheit 2 in einer um etwa 90° gedrehten Perspektive entsprechend Fig. 3. Im Vergleich zu Fig. 3 zusätzlich dargestellt, ist Ventildom 24, welcher bekanntermaßen nach der Montage mantelförmig von Ventilspule 9 umgeben ist. Die Federarme 21 sind insbesondere für den Aushärtevorgang von Dichtmaterial 5 vorteilhaft und bringen in der Weise eine Kraft auf Hydraulikeinheit 1 auf, dass Hydraulikeinheit 1 und somit die Aussparungen 20 gegen die Rastmittel 19 gedrückt werden.

Die vorstehend genannten und beschriebenen Merkmale sind im Rahmen der Erfindung nicht nur in der jeweils angegebenen Kombination, sondern auch in anderen Kombinationen oder in Alleinstellung anwendbar.

### Bezugszeichenliste

- 1: Hydraulikeinheit
- 2: Elektronische Kontrolleinheit
- 3: Gehäuse der elektronischen Kontrolleinheit
- 4: Leiterplatte
- 5: Kleber/Dichtmaterial
- 6: Tragelement
- 7: Kontaktstift
- 8: Stecker
- 9: Ventilspule
- 10: Anschlusskontaktierung
- 11: Elastisches Element
- 12: Elektronisches Bauelement
- 13: Einpresskontakt
- 14: Sockelteil
- 15: Dübel
- 16: Spreizmittel
- 17: Vormontierte Baugruppe
- 18: Elektromotor der Hydraulikpumpe
- 19: Rastmittel
- 20: Aussparung für Rastmittel 19
- 21: Federarm
- 22: Gehäusestift
- 23: Anschlagschulter von Gehäusestift 21
- 24: Ventildom
- 25: Steckerdichtung bzw. Gehäuseverdickung

## Patentansprüche

1. Elektrohydraulische Druckregelvorrichtung für Fahrzeugbremssysteme umfassend zumindest eine elektronische Kontrolleinheit (2), wenigstens eine Hydraulikeinheit (1) sowie mindestens einen Elektromotor (18) zum Antreiben einer hydraulischen Pumpe, wobei die elektronische Kontrolleinheit (2) mit der Hydraulikeinheit (1) mechanisch verbunden und in wenigstens einem Verbindungsbereich zur Hydraulikeinheit (1) mittels eines umlaufenden, insbesondere elastischen, Dichtmaterials (5) gegenüber einer äußeren Umgebung abgedichtet ist und die elektronische Kontrolleinheit (2) ein Gehäuse (3) und mindestens einen mehrere Kontaktstifte (7) aufweisenden Stecker (8) und/oder Anschlussleitung zur elektrischen Kontaktierung mittels zumindest eines Anschlusssteckers umfasst, wobei der Stecker (8) auf einer der Hydraulikeinheit (1) abgewandten Seite des Gehäuses der elektronischen Kontrolleinheit (2) angeordnet ist und das Gehäuse (3) der elektronischen Kontrolleinheit (2) wenigstens eine Ventilspule (9) zum Ansteuern hydraulischer Ventile und mindestens eine Leiterplatte (4) zur Aufnahme von elektrischen und/oder elektronischen Bauelementen umschließt, wobei die Kontaktstifte (7) und die Ventilspule (9) und mindestens ein Anschluss des Elektromotors (18) jeweils elektrisch leitfähig mit der Leiterplatte (4) verbunden sind, **dadurch gekennzeichnet, dass** das Dichtmaterial (5) entlang einer Kante der im Wesentlichen quaderförmigen Hydraulikeinheit (1) verläuft, wobei die Kante durch eine der elektronischen Kontrolleinheit (2) zugewandten Quaderfläche der Hydraulikeinheit (1) und wenigstens einer der elektronischen Kontrolleinheit (2) nicht zugewandten Quaderfläche der Hydraulikeinheit (1) gebildet ist und das Dichtmaterial (5) beide Quaderflächen im Verbindungsbereich und/oder Dichtbereich zumindest teilweise bedeckt.

2. Elektrohydraulische Druckregelvorrichtung nach Anspruch 1, **dadurch gekennzeichnet, dass** das insbesondere zusätzlich als Klebstoff wirkende Dichtmaterial (5) während eines Montageprozesses eine erhöhte Fluidität aufweist und einem Aushärtevorgang unterliegt.

3. Elektrohydraulische Druckregelvorrichtung nach mindestens einem der Ansprüche 1 oder 2, **dadurch gekennzeichnet, dass** die elektronische Kontrolleinheit (2) wenigstens ein Tragelement (6) umfasst, wobei das Tragelement (6) gegen die Hydraulikeinheit (1) und das Gehäuse (3) der elektronischen Kontrolleinheit (2) in der Weise stützt, dass das Tragelement (6) und das Gehäuse (3) der elektronischen Kontrolleinheit (2), insbesondere im Verbindungsbereich und/oder Dichtbereich zur Hydraulikeinheit, einen Mindestabstand zur Hydraulikeinheit (1) aufweisen.

4. Elektrohydraulische Druckregelvorrichtung nach mindestens einem der Ansprüche 1 bis 3, **dadurch gekennzeichnet, dass** das Tragelement (6) und das Gehäuse (3) der elektronischen Kontrolleinheit (2) und die Leiterplatte (4) zumindest eine gemeinsame und insbesondere lediglich in Kombination wirkende, mechanische Verbindung (15,16) aufweisen, welche eine relative Fixierung zueinander erlaubt.

5. Elektrohydraulische Druckregelvorrichtung nach mindestens einem der Ansprüche 1 bis 4, **dadurch gekennzeichnet, dass** das Gehäuse (3) der elektronischen Kontrolleinheit (2) mit dem Stecker (8) stoffschlüssig verbunden und/oder aus einem Kunststoff gefertigt ist und ist insbesondere im Wesentlichen einteilig ausgelegt.

6. Elektrohydraulische Druckregelvorrichtung nach mindestens einem der Ansprüche 1 bis 5, **dadurch gekennzeichnet, dass** die mechanische Verbindung der elektronischen Kontrolleinheit (2) mit der Hydraulikeinheit (1) unter Vermeidung einer oder mehrerer Schraubverbindungen ausgebildet ist.

7. Elektrohydraulische Druckregelvorrichtung nach mindestens einem der Ansprüche 1 bis 6, **dadurch gekennzeichnet, dass** das Gehäuse (3) der elektronischen Kontrolleinheit (2) Rastmittel (19) aufweist, welche in Aussparungen (20) und/oder Rastausformungen der Hydraulikeinheit (1) einrasten.

8. Elektrohydraulische Druckregelvorrichtung nach mindestens einem der Ansprüche 1 bis 7, **dadurch gekennzeichnet, dass** der Elektromotor (18) durch die elektronische Kontrolleinheit (2) umschlossen ist.

9. Elektrohydraulische Druckregelvorrichtung nach mindestens einem der Ansprüche 1 bis 8, **dadurch gekennzeichnet, dass** das Tragelement (6) mittels wenigstens eines Sockelteils (14) auf der Hydraulikeinheit (1) aufliegt, wobei das Sockelteil (14) insbesondere stoffschlüssig mit dem Tragelement (6) verbunden ist.

10. Elektrohydraulische Druckregelvorrichtung nach mindestens einem der Ansprüche 4 bis 9, **dadurch gekennzeichnet, dass** das Dichtmaterial (5) im Verbindungsbereich der elektronischen Kontrolleinheit (2) zur Hydraulikeinheit (1) wenigstens ein durch das Sockelteil (14) erzeugtes Volumen zwischen dem Tragelement (6) und der Hydraulikeinheit (1) und/oder wenigstens ein Volumen zwischen der Hydraulikeinheit (1) und dem Gehäuse (3) der elektronischen Kontrolleinheit (2) und/oder wenigstens ein Volumen zwischen dem Tragelement (6) und dem Gehäuse (3) der elektronischen Kontrolleinheit (2) teilweise oder vollständig ausfüllt.

11. Elektrohydraulische Druckregelvorrichtung nach mindestens einem der Ansprüche 4 bis 10, **dadurch gekennzeichnet, dass** zur Bildung der mechanischen Verbindung (15,16) des Tragelements (6) und des Gehäuses (3) der elektronischen Kontrolleinheit (2) und der Leiterplatte (4) wenigstens ein mit dem Tragelement (6) und/oder dem Gehäuse (3) der elektronischen Kontrolleinheit (2) insbesondere stoffschlüssig verbundener Dübel (15) in eine Durchgangsöffnung der Leiterplatte (4) eingeschoben ist, wobei wenigstens ein in den Dübel (15) eingeschobenes Spreizmittel (16) den Dübel (15) derart spreizt, dass eine zumindest teilweise mechanisch Fixierung vorliegt.

12. Elektrohydraulische Druckregelvorrichtung gemäß Anspruch 11, **dadurch gekennzeichnet, dass** das Spreizmittel (16) mit dem Gehäuse (3) der elektronischen Kontrolleinheit (2) stoffschlüssig verbunden ist.

13. Elektrohydraulische Druckregelvorrichtung nach mindestens einem der Ansprüche 4 bis 12, **dadurch gekennzeichnet, dass** das Gehäuse (3) der elektronischen Kontrolleinheit (2) Gehäusestifte (22) umfasst, welche in Öffnungen des Tragelements (6) eingeführt sind.

14. Elektrohydraulische Druckregelvorrichtung nach mindestens einem der Ansprüche 4 bis 13, **dadurch gekennzeichnet, dass** wenigstens ein elastisches Element (11) vorgesehen ist, welches auf der Ventilspule (9) aufliegt und mit dem Tragelement (6) insbesondere stoffschlüssig verbunden ist.

15. Elektrohydraulische Druckregelvorrichtung nach mindestens einem der Ansprüche 1 bis 14, **dadurch gekennzeichnet, dass** die Ventilspule (9), insbesondere zusätzlich, mit einem Klebstoff mit der Hydraulikeinheit (1) verbunden ist.

16. Elektrohydraulische Druckregelvorrichtung nach mindestens einem der Ansprüche 1 bis 15, **dadurch gekennzeichnet, dass** der Kontaktstift (7) mittels Einpresskontakten (13) elektrisch leitfähig mit der Leiterplatte (4) verbunden ist und der Kontaktstift (7) zumindest ein Sägezahnprofil aufweist, wobei das Sägezahnprofil in Ausnehmungen des Gehäuses (3) der elektronischen Kontrolleinheit (2) einkerbt.

17. Elektrohydraulische Druckregelvorrichtung nach mindestens einem der Ansprüche 1 bis 16, **dadurch gekennzeichnet, dass** mittels des Kontaktstifts (7) zumindest eine weitere wenigstens teilweise mechanische Fixierung der Leiterplatte (4) mit dem Gehäuse (3) der elektronischen Kontrolleinheit (2) vorgesehen ist.

18. \Elektrohydraulische Druckregelvorrichtung nach mindestens einem der Ansprüche 1 bis 17, **dadurch gekennzeichnet, dass** der Kontaktstift Anschlagschultern aufweist, welche auf dem Gehäuse der elektronischen Kontrolleinheit aufliegen.

19. Elektrohydraulische Druckregelvorrichtung nach mindestens einem der Ansprüche 4 bis 18, **dadurch gekennzeichnet, dass** zumindest ein Federarm (21) vorgesehen ist, welcher mit dem Tragelement (6) verbunden ist und auf der Hydraulikeinheit (1) aufliegt.

## Claims

1. Electrohydraulic pressure control device for vehicle brake systems, comprising at least one electronic control unit (2), at least one hydraulic unit (1) and at least one electric motor (18) for driving a hydraulic pump, wherein the electronic control unit (2) is mechanically connected to the hydraulic unit (1) and is sealed off from an external environment in at least one zone of connection to the hydraulic unit (1) by means of a circumferential, in particular flexible, sealing material (5), and the electronic control unit (2) comprises a housing (3) and at least one plug (8) having a plurality of contact pins (7) and/or at least one connection line for electrical contacting by means of at least one connection plug, wherein the plug (8) is arranged on a side of the housing of the electronic control unit (2) which faces away from the hydraulic unit (1), and the housing (3) of the electronic control unit (2) surrounds at least one valve coil (9) for controlling hydraulic valves and at least one circuit board (4) for holding electrical and/or electronic components, wherein the contact pins (7) and the valve coil (9) and at least one terminal of the electric motor (18) are each connected in an electrically conductive manner to the circuit board (4), **characterized in that** the sealing material (5) extends along an edge of the substantially cuboid-shaped hydraulic unit (1), wherein the edge is formed by a cuboid face of the hydraulic unit (1) which faces the electronic control unit (2) and at least one cuboid face of the hydraulic unit (1) which does not face the electronic control unit (2), and the sealing material (5) at least partially covers both cuboid faces in the zone of connection and/or sealing zone.

2. Electrohydraulic pressure control device according to Claim 1, **characterized in that** the sealing material (5), which, in particular, additionally acts as an adhesive, has an increased fluidity during an assembly process and is subject to a curing operation.

3. Electrohydraulic pressure control device according to at least one of Claims 1 and 2, **characterized in that** the electronic control unit (2) comprises at least one support element (6), wherein the support element (6) is supported against the hydraulic unit (1) and the housing (3) of the electronic control unit (2) in such a way that the support element (6) and the housing (3) of the electronic control unit (2) have a minimum spacing with respect to the hydraulic unit (1), particularly in the zone of connection and/or sealing zone with respect to the hydraulic unit.

4. Electrohydraulic pressure control device according to at least one of Claims 1 to 3, **characterized in that** the support element (6) and the housing (3) of the electronic control unit (2) and the circuit board (4) have at least one common mechanical connection (15, 16), in particular a connection which is effective only in combination, which allows fixing relative to one another.

5. Electrohydraulic pressure control device according to at least one of Claims 1 to 4, **characterized in that** the housing (3) of the electronic control unit (2) is connected materially to the plug (8) and/or is manufactured from a plastic and, in particular, is of substantially one-piece design.

6. Electrohydraulic pressure control device according to at least one of Claims 1 to 5, **characterized in that** the mechanical connection of the electronic control unit (2) to the hydraulic unit (1) is formed while avoiding one or more screwed joints.

7. Electrohydraulic pressure control device according to at least one of Claims 1 to 6, **characterized in that** the housing (3) of the electronic control unit (2) has latching means (19), which latch into recesses (20) and/or latching projections on the hydraulic unit (1).

8. Electrohydraulic pressure control device according to at least one of Claims 1 to 7, **characterized in that** the electric motor (18) is surrounded by the electronic control unit (2).

9. Electrohydraulic pressure control device according to at least one of Claims 1 to 8, **characterized in that** the support element (6) rests on the hydraulic unit (1) by means of at least one base part (14), wherein the base part (14) is connected to the support element (6), in particular materially.

10. Electrohydraulic pressure control device according to at least one of Claims 4 to 9, **characterized in that**, in the zone of connection of the electronic control unit (2) to the hydraulic unit (1), the sealing material (5) partially or completely fills at least one volume, produced by the base part (14), between the support element (6) and the hydraulic unit (1) and/or at least one volume between the hydraulic unit (1) and the housing (3) of the electronic control unit (2) and/or at least one volume between the support element (6) and the housing (3) of the electronic control unit (2) .

11. Electrohydraulic pressure control device according to at least one of Claims 4 to 10, **characterized in that** at least one peg (15) connected, in particular materially connected, to the support element (6) and/or the housing (3) of the electronic control unit (2) is inserted into a through opening in the circuit board (4) to form the mechanical connection (15, 16) of the support element (6) and the housing (3) of the electronic control unit (2) and the circuit board (4), wherein at least one expansion means (16) inserted into the peg (15) expands the peg (15) in such a way that there is at least partially mechanical fixing.

12. Electrohydraulic pressure control device according to Claim 11, **characterized in that** the expansion means (16) is connected materially to the housing (3) of the electronic control unit (2).

13. Electrohydraulic pressure control device according to at least one of Claims 4 to 12, **characterized in that** the housing (3) of the electronic control unit (2) comprises housing pins (22) which are introduced into openings in the support element (6).

14. Electrohydraulic pressure control device according to at least one of Claims 4 to 13, **characterized in that** at least one flexible element (11) is provided, which rests on the valve coil (9) and is connected to the support element (6), in particular materially.

15. Electrohydraulic pressure control device according to at least one of Claims 1 to 14, **characterized in that** the valve coil (9) is connected, in particular additionally connected, to the hydraulic unit (1) by means of an adhesive.

16. Electrohydraulic pressure control device according to at least one of Claims 1 to 15, **characterized in that** the contact pin (7) is connected in an electrically conductive manner to the circuit board (4) by means of press-in contacts (13), and the contact pin (7) has at least one sawtooth profile, wherein the sawtooth profile engages in recesses in the housing (3) of the electronic control unit (2).

17. Electrohydraulic pressure control device according to at least one of Claims 1 to 16, **characterized in that** at least one further, at least partially mechanical fixing of the circuit board (4) to the housing (3) of the electronic control unit (2) is provided by means of the contact pin (7).

18. Electrohydraulic pressure control device according to at least one of Claims 1 to 17, **characterized in that** the contact pin has stop shoulders which rest on the housing of the electronic control unit.

19. Electrohydraulic pressure control device according to at least one of Claims 4 to 18, **characterized in that** at least one spring arm (21) is provided, which is connected to the support element (6) and rests on the hydraulic unit (1).

## Revendications

1. Dispositif de régulation de pression électrohydraulique pour des systèmes de freinage de véhicule, comprenant au moins une unité de contrôle électronique (2), au moins une unité hydraulique (1) ainsi qu'au moins un moteur électrique (18) pour entraîner une pompe hydraulique, l'unité de contrôle électronique (2) étant reliée mécaniquement à l'unité hydraulique (1) et rendue étanche par rapport à un environnement extérieur au moyen d'un matériau d'étanchéité périphérique (5), en particulier élastique, dans au moins une zone de liaison avec l'unité hydraulique (1), et l'unité de contrôle électronique (2) comprenant un boîtier (3) et au moins une fiche (8) présentant plusieurs broches de contact (7) et/ou une ligne de raccordement pour la mise en contact électrique au moyen d'au moins une fiche de raccordement, la fiche (8) étant disposée sur un côté, détourné de l'unité hydraulique (1), du boîtier de l'unité de contrôle électronique (2), et le boîtier (3) de l'unité de contrôle électronique (2) entourant au moins une bobine de vanne (9) pour piloter des vannes hydrauliques et au moins une carte de circuits imprimés (4) pour recevoir des composants électriques et/ou électroniques, les broches de contact (7) et la bobine de vanne (9) et au moins une borne du moteur électrique (18) étant reliées respectivement de manière électriquement conductrice à la carte de circuits imprimés (4),
**caractérisé en ce que** le matériau d'étanchéité (5) s'étend le long d'une arête de l'unité hydraulique (1) substantiellement parallélépipédique, l'arête étant formée par une face de parallélépipède, tournée vers l'unité de contrôle électronique (2), de l'unité hydraulique (1) et par au moins une face de parallélépipède, détournée de l'unité de contrôle électronique (2), de l'unité hydraulique (1), et le matériau d'étanchéité (5) recouvrant au moins partiellement les deux faces de parallélépipède dans la zone de liaison et/ou la zone d'étanchéité.

2. Dispositif de régulation de pression électrohydraulique selon la revendication 1, **caractérisé en ce que** le matériau d'étanchéité (5), agissant en particulier aussi comme adhésif, présente une fluidité accrue pendant un processus de montage et est soumis à une opération de durcissement.

3. Dispositif de régulation de pression électrohydraulique selon au moins l'une des revendications 1 et 2, **caractérisé en ce que** l'unité de contrôle électronique (2) comprend au moins un élément de support (6), l'élément de support (6) appuyant contre l'unité hydraulique (1) et le boîtier (3) de l'unité de contrôle électronique (2) de telle sorte que l'élément de support (6) et le boîtier (3) de l'unité de contrôle électronique (2) présentent une distance minimale par rapport à l'unité hydraulique (1), en particulier dans la zone de liaison et/ou la zone d'étanchéité par rapport à l'unité hydraulique.

4. Dispositif de régulation de pression électrohydraulique selon au moins l'une des revendications 1 à 3, **caractérisé en ce que** l'élément de support (6) et le boîtier (3) de l'unité de contrôle électronique (2) et la carte de circuits imprimés (4) présentent au moins une liaison mécanique (15, 16) commune et agissant en particulier uniquement en combinaison qui permet une fixation relative l'un par rapport à l'autre.

5. Dispositif de régulation de pression électrohydraulique selon au moins l'une des revendications 1 à 4, **caractérisé en ce que** le boîtier (3) de l'unité de contrôle électronique (2) est relié à la fiche (8) par liaison de matière et/ou est fabriqué en matière plastique et est en particulier conçu substantiellement en une seule pièce.

6. Dispositif de régulation de pression électrohydraulique selon au moins l'une des revendications 1 à 5, **caractérisé en ce que** la liaison mécanique entre l'unité de contrôle électronique (2) et l'unité hydraulique (1) est réalisée en évitant un ou plusieurs assemblages vissés.

7. Dispositif de régulation de pression électrohydraulique selon au moins l'une des revendications 1 à 6, **caractérisé en ce que** le boîtier (3) de l'unité de contrôle électronique (2) présente des moyens d'enclenchement (19) qui s'enclenchent dans des évidements (20) et/ou des structures d'enclenchement de l'unité hydraulique (1).

8. Dispositif de régulation de pression électrohydraulique selon au moins l'une des revendications 1 à 7, **caractérisé en ce que** le moteur électrique (18) est entouré par l'unité de contrôle électronique (2).

9. Dispositif de régulation de pression électrohydraulique selon au moins l'une des revendications 1 à 8, **caractérisé en ce que** l'élément de support (6) repose au moyen d'au moins une partie de socle (14) sur l'unité hydraulique (1), la partie de socle (14) étant reliée à l'élément de support (6), en particulier par liaison de matière.

10. Dispositif de régulation de pression électrohydraulique selon au moins l'une des revendications 4 à 9, **caractérisé en ce que** le matériau d'étanchéité (5) dans la zone de liaison de l'unité de contrôle électronique (2) à l'unité hydraulique (1) remplit partiellement ou entièrement au moins un volume créé par la partie de socle (14) entre l'élément de support (6) et l'unité hydraulique (1) et/ou au moins un volume entre l'unité hydraulique (1) et le boîtier (3) de l'unité de contrôle électronique (2) et/ou au moins un volume entre l'élément de support (6) et le boîtier (3) de l'unité de contrôle électronique (2).

11. Dispositif de régulation de pression électrohydraulique selon au moins l'une des revendications 4 à 10, **caractérisé en ce que** pour former la liaison mécanique (15, 16) de l'élément de support (6) et du boîtier (3) de l'unité de contrôle électronique (2) et de la carte de circuits imprimés (4), au moins une cheville (15) reliée à l'élément de support (6) et/ou au boîtier (3) de l'unité de contrôle électronique (2), en particulier par liaison de matière, est insérée dans une ouverture traversante de la carte de circuits imprimés (4), dans lequel au moins un moyen d'expansion (16) inséré dans la cheville (15) provoque l'expansion de la cheville (15) de telle sorte qu'une fixation au moins partiellement mécanique est donnée.

12. Dispositif de régulation de pression électrohydraulique selon la revendication 11, **caractérisé en ce que** le moyen d'expansion (16) est relié au boîtier (3) de l'unité de contrôle électronique (2) par liaison de matière.

13. Dispositif de régulation de pression électrohydraulique selon au moins l'une des revendications 4 à 12, **caractérisé en ce que** le boîtier (3) de l'unité de contrôle électronique (2) comprend des tiges de boîtier (22) qui sont introduites dans des ouvertures de l'élément de support (6).

14. Dispositif de régulation de pression électrohydraulique selon au moins l'une des revendications 4 à 13, **caractérisé en ce qu'**au moins un élément élastique (11) est prévu qui repose sur la bobine de vanne (9) et est relié à l'élément de support (6), en particulier par liaison de matière.

15. Dispositif de régulation de pression électrohydraulique selon au moins l'une des revendications 1 à 14, **caractérisé en ce que** la bobine de vanne (9) est reliée à l'unité hydraulique (1) par un adhésif, en particulier de façon supplémentaire.

16. Dispositif de régulation de pression électrohydraulique selon au moins l'une des revendications 1 à 15, **caractérisé en ce que** la broche de contact (7) est reliée de manière électriquement conductrice à la carte de circuits imprimés (4) au moyen de contacts à enfoncer (13), et la broche de contact (7) présente au moins un profil en dents de scie, le profil en dents de scie s'encochant dans des creux du boîtier (3) de l'unité de contrôle électronique (2).

17. Dispositif de régulation de pression électrohydraulique selon au moins l'une des revendications 1 à 16, **caractérisé en ce qu'**au moins une autre fixation au moins partiellement mécanique de la carte de circuits imprimés (4) au boîtier (3) de l'unité de contrôle électronique (2) est prévue au moyen de la broche de contact (7).

18. Dispositif de régulation de pression électrohydraulique selon au moins l'une des revendications 1 à 17, **caractérisé en ce que** la broche de contact présente des épaulements de butée qui reposent sur le boîtier de l'unité de contrôle électronique.

19. Dispositif de régulation de pression électrohydraulique selon au moins l'une des revendications 4 à 18, **caractérisé en ce qu'**au moins un bras ressort (21) est prévu qui est relié à l'élément de support (6) et repose sur l'unité hydraulique (1).
